# EUROPEAN PATENT SPECIFICATION

(11) **EP 4 685 089 B1**
(45) Date of publication and mention of the grant of the patent: **14.10.2026**
(21) Application number: 25187333.7
(22) Date of filing: 03.07.2025
(51) Int. Cl.: B65G 47/08, B65B 35/36, B65B 35/38, B65B 35/44, B65G 47/91, B65B 35/18, B65B 35/54

(54) **METHOD AND SYSTEM FOR PACKAGING PRODUCTS**
VERFAHREN UND SYSTEM ZUM VERPACKEN VON PRODUKTEN
PROCÉDÉ ET SYSTÈME D'EMBALLAGE DE PRODUITS

(30) Priority: 23.07.2024 IT 202400017101
(43) Date of publication of application: 28.01.2026
(73) Proprietor: Fameccanica.Data S.p.A., 66020 San Giovanni Teatino (CH) (IT)
(72) Inventor: GALANTE, Dario, I-66020 San Giovanni Teatino (Chieti) (IT); FAIETA, Fabrizio, I-66020 San Giovanni Teatino (Chieti) (IT)
(74) Representative: Buzzi, Notaro & Antonielli d'Oulx S.p.A.

(56) References cited:
- EP-B1- 2 792 626
- WO-A1-2010/030844
- WO-A1-2018/064259
- DE-A1- 102015 109 734

## Description

### Field of the Invention

The present invention relates to a method and a system for packaging products.

The invention has been developed in particular with a view to its application to the packaging of absorbent sanitary articles.

A specific field of use of the present invention is the boxing in cardboard boxes of packs of absorbent sanitary articles enclosed in bags.

However, the invention is not limited to this specific sector and can be used in all cases where it is necessary to package products at the end of a production line.

### Prior Art

Systems for boxing products at the end of a production line represent a crucial element in industrial automation. These systems, often equipped with advanced robotic technology, are designed to ensure efficiency and precision in product packaging. Using automatic handling units equipped with anthropomorphic robots or similar, these systems can handle a wide range of product sizes and types, adapting to the specific needs of each customer. Customization is a fundamental aspect, allowing the systems to be configured to handle variable production volumes and to respond optimally to market dynamics. The efficiency of these systems translates into a significant improvement in productivity and the ability to respond quickly to changes in production needs.

In these systems, robotic boxing machines are used, conceived and realized to allow vertical filling of boxes with previously formed groups of products, in which the products within the groups are arranged with a predetermined orientation determined in order to optimally exploit the volume of the boxes.

To feed a boxing machine, it is advantageous to use product feeding systems that divide a continuous array of products at the exit of a production line into two or more parallel arrays that feed the boxing machine. Such feeding systems can vary greatly depending on factors such as the type of product, shape, weight, geometry, and material. The choice of the most suitable feeding system depends on various factors, including the feeding speed of the products, the available space, and the way in which the products are loaded into the boxing machine.

WO2010/030844 describes an apparatus for packaging articles comprising a first article conveyor to convey a first flow of articles at a first speed, a second article conveyor to convey a second flow of articles at a second speed, and driving means to operate the conveyors capable of modifying the first and second speed relative to each other in order to align a given article of one flow with a corresponding article of the other flow and subsequently convey these articles in alignment with each other.

EP 2 792 626 B1 discloses a method for packaging products according to the preamble of claim 1 and a system for packaging products according to the preamble of claim 7.

### Object and Summary of the Invention

The object of the present invention is to provide a method and a system for packaging products that overcome the problems of the prior art.

In particular, the object of the present invention is to reduce the number of manipulators and conveyors necessary to form aligned arrays of products starting from a flow of products aligned in a single array at the exit of a production line.

According to the present invention, this object is achieved by a method and a system for packaging products having the features forming the subject of claims 1 and 7.

Preferred embodiments form the subject of the dependent claims.

### Brief Description of the Drawings

The present invention will now be described in detail with reference to the attached drawings, given purely by way of non-limiting example, in which:
- Figure 1 is a schematic plan view of a first embodiment of a system for packaging products according to the present invention,
- Figure 2 is a schematic view of a manipulator indicated by arrow II in Figure 1,
- Figure 3 is a schematic plan view of a second embodiment of a system for packaging products according to the present invention, and
- Figures 4-10 are schematic views illustrating the operating sequence of the system of Figure 3.

### Detailed Description

Referring to the drawings, 10 indicates a system for packaging products P1, P2,...PN. The system 10 is intended in particular for the boxing of products P1, P2,...PN in cardboard boxes. The products P1, P2,...PN may be packs of articles, for example absorbent sanitary articles, enclosed in bags.

The system 10 may comprise a bagging unit 12 configured to enclose packs of articles in bags. At the exit of the bagging unit, the products P1, P2,...PN are aligned with each other in a single array R1.

The system 10 includes a packaging unit 14, for example a boxing machine, configured to package groups of products, for instance to insert one or more groups of products into cardboard boxes.

The system 10 includes a feed conveyor 20 configured to feed in a transport direction X a first array of products R1 formed by products P1, P2,...PN coming from the exit of a production line and aligned with each other in the transport direction X.

The system 10 comprises at least one manipulator 22 configured to form on the feed conveyor 20 two or more arrays of products R1, R2,...RN starting from products P1, P2,...PN initially arranged in a single array of products R1.

The manipulator 22 includes a gripping element 24 configured to cyclically pick up one or more products P2,...PN, for example by suction.

The system 10 may include a vision system 26 associated with a control unit 28 configured to control the manipulator 22 based on information provided by the vision system 26.

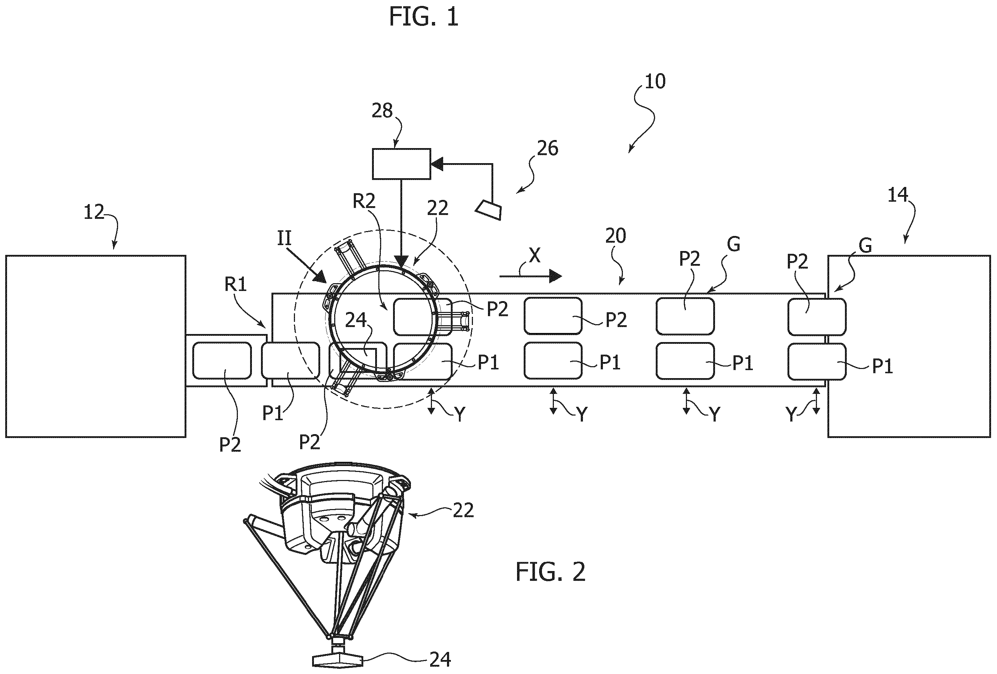

Figure 2 illustrates an embodiment of a system 10 configured to form on the feed conveyor 20 two arrays of products R1, R2 starting from products P1, P2 initially arranged in a single array of products R1.

In this embodiment, for each sequence of two products P1, P2 of the first array of products R1, the manipulator 22 is configured to cyclically pick up a second product P2 preceding or following a first product P1 and to deposit the second product P2 on the feed conveyor 20 aligned with the respective first product P1 in a transverse direction Y orthogonal to the transport direction X.

In this way, successive groups of products G are formed on the feed conveyor 20, each of which is formed by two products P1, P2 aligned with each other in a transverse direction Y. Therefore, two arrays of products R1, R2 aligned with each other and parallel to the transport direction X are formed on the feed conveyor 20.

The feed conveyor 20 feeds the groups of products G in the transport direction X to a packaging unit 14, for example a boxing machine, configured to receive and package the groups of products G.

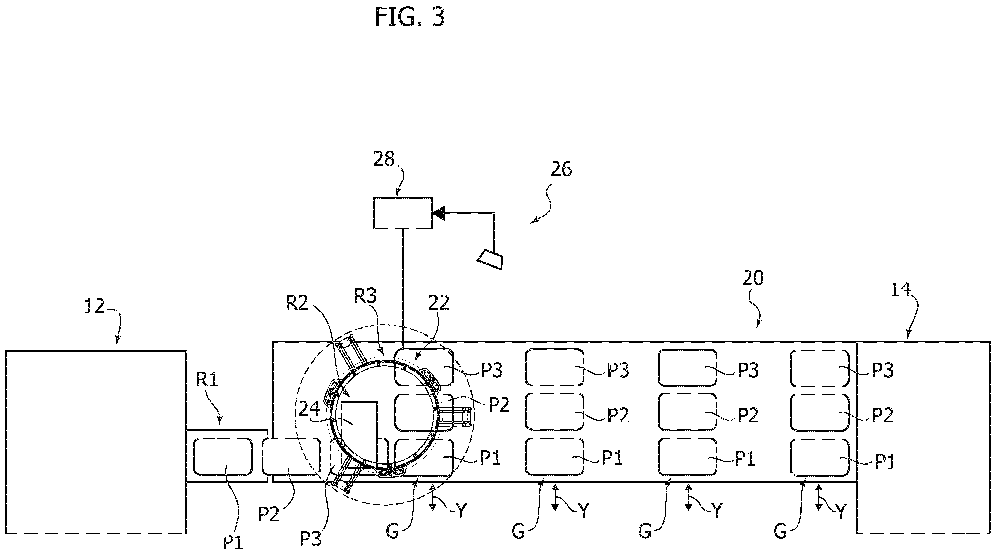

Figure 3 illustrates an embodiment of a system 10 configured to form on the feed conveyor 20 three arrays of products R1, R2, R3 starting from products P1, P2, P3 initially arranged in a single array of products R1.

In this embodiment, for each sequence of three products P1, P2, P3 of the first array of products R1, the manipulator 22 is configured to cyclically pick up a second product P2 and a third product P3 preceding or following a first product P1. The second product P2 and the third product P3 can be picked up in succession by the same gripping element 24. The manipulator 22 is configured to deposit the second product P2 and the third product P3 on the feed conveyor 20 aligned with the respective first product P1 in a transverse direction Y orthogonal to the transport direction X.

In this way, successive groups of products G are formed on the feed conveyor 20, each of which is formed by three products P1, P2, P3 aligned with each other in a transverse direction Y. Therefore, three arrays of products R1, R2, R3 aligned with each other and parallel to the transport direction X are formed on the feed conveyor 20.

Also in this embodiment, the feed conveyor 20 feeds the groups of products G in the transport direction X to the packaging unit 14.

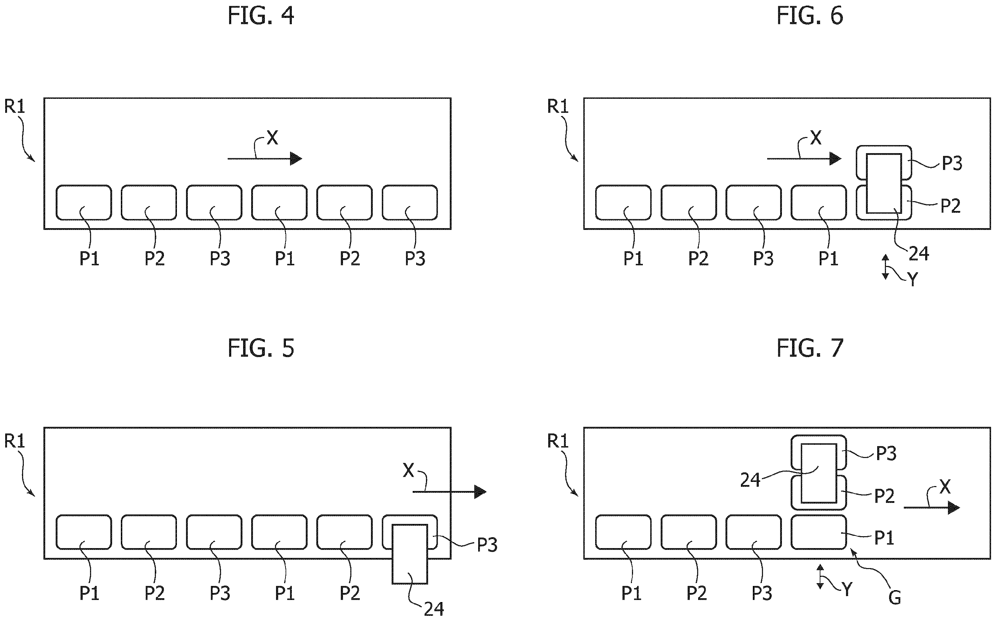

Figures 4-10 illustrate the sequence of steps for the formation of the arrays of products R1, R2, R3.

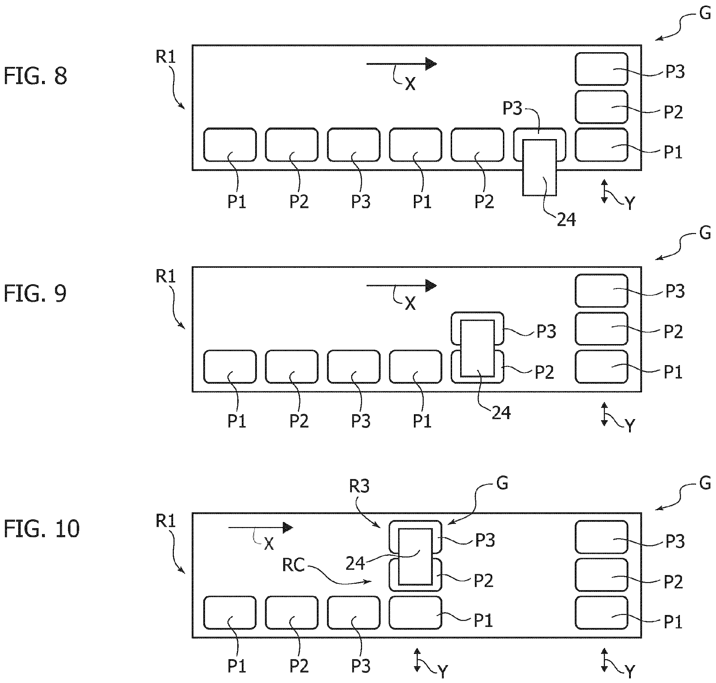

Figure 4 shows the products P1, P2, P3 advancing in the transport direction X aligned with each other in a single array R1. Figures 5 and 6 illustrate the phases in which the products P2, P3 are sequentially picked up by the gripping element 24. Figure 7 illustrates the phase in which the products P2, P3 are aligned transversely to the product P1 to form a group G. Figures 8, 9, and 10 illustrate the phases of a subsequent cycle in which the previous phases are repeated to form a subsequent group G.

In the example illustrated in Figures 4-10, subsequent products P2, P3 are aligned with a respective preceding product P1. Alternatively, the same result can be achieved when preceding products P2, P3 are aligned with a respective subsequent product P1.

The system 10 according to the present invention can be configured to form on the feed conveyor 20 a generic number N of arrays of products R1, R2,... RN starting from products P1, P2,... PN initially arranged in a single array of products R1.

In this case, for each sequence of N products P1-PN in the first array of products R1, the manipulator 22 is configured to cyclically pick up N-1 products P2-PN preceding or following a first product P1 and to deposit the N-1 products P2-PN on the feed conveyor 20 aligned with the first product P1 in a transverse direction Y orthogonal to the transport direction X to form on the feed conveyor 20 successive groups of products G each of which is formed by N products P1-PN aligned with each other in a transverse direction Y, in order to form on the feed conveyor 20 a number N of arrays of products R1-RN aligned with each other and parallel to the transport direction X.

The system 10 may include a compacting device configured to bring the groups of products G closer to each other in the transport direction X.

Such a compacting device may include two conveyor belts operated at speeds different from each other or a pushing element configured to push the last product of a group of products in order to bring successive groups of products closer together. The pusher may offer the advantage of also aligning the products in the direction of advancement. The compacting device may also include two conveyor belts operated at speeds different from each other and motorized stops that ensure alignment of the products in the direction of advancement and that could push or brake the groups of products. Downstream of the system, a transverse compacting device may also be provided that brings the products closer together orthogonally to the direction of advancement to ensure greater efficiency of the boxing system.

In operation, the previously described system 10 implements a method for packaging products, comprising:
- feeding in a transport direction X a first array of products R1 formed by products P1-PN aligned with each other in the transport direction X via a feed conveyor 20,
- in the first array of products R1 for each sequence of N products P1-PN cyclically picking up N-1 products P2-PN preceding or following a first product P1,
- depositing the N-1 products P2-PN on the feed conveyor 20 aligned with the respective first product P1 in a transverse direction Y orthogonal to the transport direction X and forming on the feed conveyor 20 successive groups of products G each of which is formed by N products P1-PN aligned with each other in a transverse direction Y, and
- feeding the groups of products G in the transport direction X to a packaging unit 14 via the feed conveyor 20.

A particularly relevant advantage of the present invention is that the formation of the N parallel arrays is carried out by moving N-1 products in each cycle of the manipulator. In the case where the incoming products are distributed over two arrays, only 50% of the products need to be moved. With the same operational capacity of the manipulators, a system according to the present invention allows for a reduction in the number of manipulators compared to solutions that involve moving all the incoming products.

Furthermore, the solution according to the present invention performs the formation of the N arrays of products on the same conveyor that feeds the incoming array of products, with obvious advantages in terms of simplification of the layout and reduction of space compared to solutions that transfer products between various conveyors.

Of course, while the principle of the invention remains unchanged, the construction details and embodiments can be widely varied without departing from the scope of the invention as defined by the following claims.

## Claims

1. A method for packaging products, comprising:
- feeding in a transport direction (X) a first array of products (R1) formed by products (P1-PN) aligned with each other in said transport direction (X) via a feed conveyor (20), , and being **characterized in that** it comprises:
- in said first array of products (R1) for each sequence of N products (P1-PN) cyclically picking up N-1 products (P2-PN) preceding or following a first product (P1),
- depositing said N-1 products (P2-PN) on said feed conveyor (20) aligned with said first product (P1) in a transverse direction (Y) orthogonal to said transport direction (X) and forming on said feed conveyor (20) successive groups of products (G) each of which is formed by N products (P1-PN) aligned with each other in a transverse direction (Y), in order to form on said feed conveyor (20) N arrays of products (R1-RN) aligned with each other and parallel to said transport direction (X), and
- feeding said groups of products (G) in said transport direction (X) to a packaging unit via said feed conveyor (20).

2. The method of claim 1, wherein said N-1 products (P2-PN) of each sequence of N products (P1-PN) are moved by at least one manipulator (22) provided with a gripping element (24).

3. The method of claim 2, wherein said N-1 products (P2-PN) of each sequence of N products (P1-PN) are picked up in succession by a single gripping element (24).

4. The method of claim 1 or claim 2, wherein said gripping element (24) picks up said products (P2-PN) by suction.

5. The method of any of claims 2-4, comprising controlling said manipulator (22) based on information provided by a vision system (26).

6. The method of any of the preceding claims, comprising compacting said groups of products (G) together in said transport direction (X).

7. A system for packaging products, comprising:
- a feed conveyor (20) configured to feed in a transport direction (X) a first array of products (R1) formed by products (P1-PN) aligned with each other in said transport direction (X), and being **characterized in that** it comprises:
- at least one manipulator (22) configured to cyclically pick up N-1 products (P2-PN) preceding or following a first product (P1) in each sequence of N products (P1-PN) in said first array of products (R1), wherein said manipulator (22) is configured to deposit said N-1 products (P2-PN) on said feed conveyor (20) aligned with said first product (P1) in a transverse direction (Y) orthogonal to said transport direction (X) and to form on said feed conveyor (20) successive groups of products (G) each of which is formed by N products (P1-PN) aligned with each other in a transverse direction (Y), in order to form on said feed conveyor (20) N arrays of products (R1-RN) aligned with each other and parallel to said transport direction (X), and
- a packaging unit (14) configured to receive from said feed conveyor (20) said groups of products (G) fed in said transport direction (X).

8. The system of claim 7, wherein said manipulator (22) includes a gripping element (24) configured to pick up said products (P2-PN) by suction.

9. The system of claim 8, comprising a vision system (26) associated with a control unit (28) configured to control said manipulator (22) based on information provided by said vision system (26).

10. The system of any of claims 7-9, comprising a compacting device configured to bring said groups of products (G) closer together in said transport direction (X).

## Patentansprüche

1. Verfahren zum Verpacken von Produkten, umfassend:
- Zuführen einer ersten Anordnung von Produkten (R1), die durch in einer Transportrichtung (X) miteinander ausgerichtete Produkte (P1-PN) gebildet wird, in einer Transportrichtung (X) mittels eines Zuführförderers (20), und **dadurch gekennzeichnet, dass** es umfasst:
- in der genannten ersten Anordnung von Produkten (R1) für jede Sequenz von N Produkten (P1-PN) zyklisches Aufnehmen von N-1 Produkten (P2-PN), die einem ersten Produkt (P1) vorausgehen oder nachfolgen,
- Ablegen der genannten N-1 Produkte (P2-PN) auf dem genannten Zuführförderer (20), ausgerichtet mit dem genannten ersten Produkt (P1) in einer Querrichtung (Y) orthogonal zu der genannten Transportrichtung (X), und Bilden von aufeinanderfolgenden Gruppen von Produkten (G) auf dem genannten Zuführförderer (20), von denen jede durch N Produkte (P1-PN) gebildet wird, die in einer Querrichtung (Y) miteinander ausgerichtet sind, um auf dem genannten Zuführförderer (20) N Anordnungen von Produkten (R1-RN) zu bilden, die miteinander und parallel zu der genannten Transportrichtung (X) ausgerichtet sind, und
- Zuführen der genannten Gruppen von Produkten (G) in der genannten Transportrichtung (X) zu einer Verpackungseinheit mittels des genannten Zuführförderers (20).

2. Verfahren nach Anspruch 1, wobei die genannten N-1 Produkte (P2-PN) jeder Sequenz von N Produkten (P1-PN) durch mindestens einen Manipulator (22) bewegt werden, der mit einem Greifelement (24) versehen ist.

3. Verfahren nach Anspruch 2, wobei die genannten N-1 Produkte (P2-PN) jeder Sequenz von N Produkten (P1-PN) nacheinander durch ein einziges Greifelement (24) aufgenommen werden.

4. Verfahren nach Anspruch 1 oder Anspruch 2, wobei das genannte Greifelement (24) die genannten Produkte (P2-PN) durch Saugkraft aufnimmt.

5. Verfahren nach einem der Ansprüche 2-4, umfassend das Steuern des genannten Manipulators (22) basierend auf Informationen, die von einem Bildverarbeitungssystem (26) bereitgestellt werden.

6. Verfahren nach einem der vorhergehenden Ansprüche, umfassend das Zusammenschieben der genannten Gruppen von Produkten (G) in der genannten Transportrichtung (X).

7. System zum Verpacken von Produkten, umfassend:
- einen Zuführförderer (20), der dazu eingerichtet ist, eine erste Anordnung von Produkten (R1), die durch in der genannten Transportrichtung (X) miteinander ausgerichtete Produkte (P1-PN) gebildet wird, in einer Transportrichtung (X) zuzuführen, und **dadurch gekennzeichnet, dass** es umfasst:
- mindestens einen Manipulator (22), der dazu eingerichtet ist, in jeder Sequenz von N Produkten (P1-PN) in der genannten ersten Anordnung von Produkten (R1) zyklisch N-1 Produkte (P2-PN) aufzunehmen, die einem ersten Produkt (P1) vorausgehen oder nachfolgen, wobei der genannte Manipulator (22) dazu eingerichtet ist, die genannten N-1 Produkte (P2-PN) auf dem genannten Zuführförderer (20) abzulegen, ausgerichtet mit dem genannten ersten Produkt (P1) in einer Querrichtung (Y) orthogonal zu der genannten Transportrichtung (X), und auf dem genannten Zuführförderer (20) aufeinanderfolgende Gruppen von Produkten (G) zu bilden, von denen jede durch N Produkte (P1-PN) gebildet wird, die in einer Querrichtung (Y) miteinander ausgerichtet sind, um auf dem genannten Zuführförderer (20) N Anordnungen von Produkten (R1-RN) zu bilden, die miteinander und parallel zu der genannten Transportrichtung (X) ausgerichtet sind, und
- eine Verpackungseinheit (14), die dazu eingerichtet ist, von dem genannten Zuführförderer (20) die genannten Gruppen von Produkten (G) zu empfangen, die in der genannten Transportrichtung (X) zugeführt werden.

8. System nach Anspruch 7, wobei der genannte Manipulator (22) ein Greifelement (24) umfasst, das dazu eingerichtet ist, die genannten Produkte (P2-PN) durch Saugkraft aufzunehmen.

9. System nach Anspruch 8, umfassend ein Bildverarbeitungssystem (26), das einer Steuereinheit (28) zugeordnet ist, die zum Steuern des genannten Manipulators (22) basierend auf Informationen eingerichtet ist, die von dem genannten Bildverarbeitungssystem (26) bereitgestellt werden.

10. System nach einem der Ansprüche 7-9, umfassend eine Verdichtungsvorrichtung, die dazu eingerichtet ist, die genannten Gruppen von Produkten (G) in der genannten Transportrichtung (X) näher zusammenzubringen.

## Revendications

1. Procédé pour emballer des produits, comprenant:
- l'alimentation dans une direction de transport (X) d'un premier réseau de produits (R1) formé par des produits (P1-PN) alignés les uns avec les autres dans ladite direction de transport (X) via un convoyeur d'alimentation (20), et étant **caractérisé en ce qu'**il comprend:
- dans ledit premier réseau de produits (R1), pour chaque séquence de N produits (P1-PN), le prélèvement cyclique de N-1 produits (P2-PN) précédant ou suivant un premier produit (P1),
- le dépôt desdits N-1 produits (P2-PN) sur ledit convoyeur d'alimentation (20) alignés avec ledit premier produit (P1) dans une direction transversale (Y) orthogonale à ladite direction de transport (X) et la formation sur ledit convoyeur d'alimentation (20) de groupes successifs de produits (G) dont chacun est formé par N produits (P1-PN) alignés les uns avec les autres dans une direction transversale (Y), afin de former sur ledit convoyeur d'alimentation (20) N réseaux de produits (R1-RN) alignés les uns avec les autres et parallèles à ladite direction de transport (X), et
- l'alimentation desdits groupes de produits (G) dans ladite direction de transport (X) vers une unité d'emballage via ledit convoyeur d'alimentation (20).

2. Procédé selon la revendication 1, dans lequel lesdits N-1 produits (P2-PN) de chaque séquence de N produits (P1-PN) sont déplacés par au moins un manipulateur (22) muni d'un élément de préhension (24).

3. Procédé selon la revendication 2, dans lequel lesdits N-1 produits (P2-PN) de chaque séquence de N produits (P1-PN) sont prélevés en succession par un seul élément de préhension (24).

4. Procédé selon la revendication 1 ou la revendication 2, dans lequel ledit élément de préhension (24) prélève lesdits produits (P2-PN) par aspiration.

5. Procédé selon l'une quelconque des revendications 2 à 4, comprenant la commande dudit manipulateur (22) sur la base d'informations fournies par un système de vision (26).

6. Procédé selon l'une quelconque des revendications précédentes, comprenant le compactage desdits groupes de produits (G) ensemble dans ladite direction de transport (X).

7. Système pour emballer des produits, comprenant:
- un convoyeur d'alimentation (20) configuré pour alimenter dans une direction de transport (X) un premier réseau de produits (R1) formé par des produits (P1-PN) alignés les uns avec les autres dans ladite direction de transport (X), et étant **caractérisé en ce qu'**il comprend:
- au moins un manipulateur (22) configuré pour prélever cycliquement N-1 produits (P2-PN) précédant ou suivant un premier produit (P1) dans chaque séquence de N produits (P1-PN) dans ledit premier réseau de produits (R1), dans lequel ledit manipulateur (22) est configuré pour déposer lesdits N-1 produits (P2-PN) sur ledit convoyeur d'alimentation (20) alignés avec ledit premier produit (P1) dans une direction transversale (Y) orthogonale à ladite direction de transport (X) et pour former sur ledit convoyeur d'alimentation (20) des groupes successifs de produits (G) dont chacun est formé par N produits (P1-PN) alignés les uns avec les autres dans une direction transversale (Y), afin de former sur ledit convoyeur d'alimentation (20) N réseaux de produits (R1-RN) alignés les uns avec les autres et parallèles à ladite direction de transport (X), et
- une unité d'emballage (14) configurée pour recevoir dudit convoyeur d'alimentation (20) lesdits groupes de produits (G) alimentés dans ladite direction de transport (X).

8. Système selon la revendication 7, dans lequel ledit manipulateur (22) inclut un élément de préhension (24) configuré pour prélever lesdits produits (P2-PN) par aspiration.

9. Système selon la revendication 8, comprenant un système de vision (26) associé à une unité de commande (28) configurée pour commander ledit manipulateur (22) sur la base d'informations fournies par ledit système de vision (26).

10. Système selon l'une quelconque des revendications 7 à 9, comprenant un dispositif de compactage configuré pour rapprocher lesdits groupes de produits (G) les uns des autres dans ladite direction de transport (X).
